# EUROPÄISCHE PATENTANMELDUNG

(11) **EP 3 772 389 A1**
(43) Veröffentlichungstag der Anmeldung: **10.02.2021**
(21) Anmeldenummer: 19190384.8
(22) Anmeldetag: 06.08.2019
(51) Int. Cl.: B23K 9/073, B23K 9/09, B23K 9/173

(54) **VERFAHREN UND VORRICHTUNG ZUR STABILISIERUNG EINES ÜBERGANGES ZWISCHEN VERSCHIEDENARTIGEN SCHWEISSPROZESSPHASEN EINES SCHWEISSPROZESSES**

(71) Anmelder: Fronius International GmbH, 4643 Pettenbach (AT)
(72) Erfinder: Söllinger, Dominik, 4643 Pettenbach (AT); Waldhör, Andreas, 4643 Pettenbach (AT); Mayer, Manuel, 4643 Pettenbach (AT)
(74) Vertreter: Isarpatent

(57) **Zusammenfassung**

Schweißgerät (1) zum Schweißen eines Werkstückes (W) in einem Schweißprozess (SP) der verschiedenartige Schweißprozessphasen (SPP) umfasst, in denen das Werkstück (W) jeweils mit einem Schweißlichtbogen (LB) geschweißt wird, der sich zwischen einer Schweißdrahtelektrode (SDE) des Schweißgerätes (1) und dem Werkstück (W) erstreckt, wobei für die Schweißprozessphasen (SPP) ein Lichtbogenparameter, LBP, des Schweißlichtbogens (LB) insbesondere dessen Lichtbogenlänge, LBL, einstellbar ist, wobei das Schweißgerät (1) eine Steuerung (4) aufweist, die während eines Schweißprozessüberganges (SPÜ) zwischen verschiedenartigen Schweißprozessphasen (SPP) des Schweißprozesses (SP) eine Änderung des Lichtbogenparameters, ΔLBP, des Schweißlichtbogens (LB) entsprechend der für die Schweißprozessphasen (SPP) eingestellten Lichtbogenparameter, LBP, vornimmt und gleichzeitig mindestens einen Übergangsschweißparameter, ÜSP, einer Schweißstromquelle (2) des Schweißgerätes (1) in Abhängigkeit der vorgenommenen Lichtbogenparameteränderung, ΔLBP, zur Stabilisierung des Schweißprozessüberganges (SPÜ) innerhalb des Schweißprozesses (SP) automatisch anpasst

## Beschreibung

Die Erfindung betrifft ein Verfahren und eine Vorrichtung zur Stabilisierung eines Überganges zwischen verschiedenartigen Schweißprozessphasen eines Schweißprozesses, insbesondere bei Lichtbogenschweißverfahren.

Beim Lichtbogenschweißen brennt ein Schweißlichtbogen zwischen einem Werkstück und einer Schweißdrahtelektrode. Die Schweißdrahtelektrode kann dabei abschmelzen und als Zusatzwerkstoff dienen. Beim Schutzgasschweißen wird der Lichtbogen durch ein Schutzgas, wie beispielsweise Kohlendioxid oder Argon, vor der Atmosphäre abgeschirmt. Die Schweißdrahtelektrode, die kontinuierlich abschmilzt, wird von einer Drahtspule laufend nachgezogen. Die Schweißdrahtelektrode verläuft hierbei in einem Schlauch, mit dem auch das Schutzgas zugeführt wird. Beim MIG-Schweißen, dem Metall-Inertgas-Schweißen, verwendet man inerte Schutzgase. Beim MAG-Schweißen, dem Metallaktivgas-Schweißen werden demgegenüber reaktionsfähige Gase wie Kohlenstoffdioxid als Schutzgas eingesetzt.

Verschiedene Schweißparameter, insbesondere die Lichtbogenlänge, beeinflussen das Ergebnis des Schweißprozesses. Kurzlichtbogenschweißen findet Anwendung bei dünnen Blechen oder schwierigen Schweißstellen. Es entsteht hierbei rissarmer und glatter Übergang der Werkstoffe. Demgegenüber findet Langlichtbogenschweißen vor allem Anwendung bei dickeren Blechen.

Beim Metallschutzgasschweißen MSG, d.h. wahlweise das MIG oder MAG-Schweißen wird eine abschmelzbare Schweißdrahtelektrode verwendet, die von einem Elektromotor mit veränderbarer Drahtvorschubgeschwindigkeit nachgeführt werden kann. Die Schweißdrahtelektrode wird entsprechend den eingestellten Schweißparametern durch den Schweißlichtbogen in unterschiedlicher Weise abgeschmolzen.
Beim Schweißen mit Impulslichtbogen wird ein Grundstrom regelmäßig durch einen erhöhte Impulsstrom überlagert. Während der Grundstromphase brennt der Lichtbogen bzw. Schweißlichtbogen mit geringer Leistung, wobei der Zusatzwerkstoff angeschmolzen wird und das Schweißbad flüssig gehalten wird. Bei der Impulsphase bildet sich ein Tropfen, der durch die wachsende magnetische Einschnürung (Pinch-Effekt) abgelöst wird. Abhängig vom Drahtdurchmesser der Schweißdrahtelektrode und dem Material der Schweißdrahtelektrode können die Einstellwerte derart gewählt werden, dass bei jedem Stromimpuls ein Tropfen erzeugt und abgelöst wird. Je nach eingestellter Schweißspannung und eingestelltem Schweißstrom sowie eingestellter Lichtbogenlänge kann man zwischen verschiedenen Lichtbogenarten unterscheiden, wie allgemein aus dem Stand der Technik bekannt. Die verschiedenen Lichtbogenarten umfassen einen Kurzlichtbogen, einen Langlichtbogen und einen Impulslichtbogen und einen sogenannten Sprühlichtbogen sowie einen rotierenden Lichtbogen. Der Drahtvorschub kann dabei sowohl in Richtung Werkstück als auch in entgegengesetzter Richtung gefördert werden.

In vielen Anwendungsfällen ist es notwendig, zwischen verschiedenen Schweißprozessphasen zu wechseln. Die verschiedenen Schweißprozessphasen weisen unterschiedliche Schweißparameter und/oder Lichtbogenarten auf. Bei vielen Schweißprozessen findet ein zyklischer Wechsel zwischen verschiedenen Schweißprozessphasen statt. Allerdings besteht bei herkömmlichen Schweißprozessen die Schwierigkeit, einen Prozessübergang von einer Schweißprozessphase zur nachfolgenden Schweißprozessphase des Schweißprozesses zu stabilisieren. Derartige Instabilitäten beim Wechsel zwischen verschiedenen Schweißprozessphasen können negative Auswirkungen auf das Schweißergebnis haben, insbesondere hinsichtlich des Aussehens der gebildeten Schweißnaht oder auftretender Schweißspritzer.

Es ist daher eine Aufgabe der vorliegenden Erfindung, ein Verfahren und eine Vorrichtung zur Stabilisierung eines Überganges zwischen verschiedenartigen Schweißprozessphasen eines Schweißprozesses zu schaffen.

Diese Aufgabe wird erfindungsgemäß durch ein Verfahren mit den in Patentanspruch 1 angegebenen Merkmalen gelöst.

Die Erfindung schafft demnach ein Verfahren zum Stabilisieren eines Überganges zwischen verschiedenartigen Schweißprozessphasen eines Schweißprozesses,
wobei zumindest in den Schweißprozessphasen ein Werkstück jeweils mit einem Schweißlichtbogen geschweißt wird, der sich zwischen einer Schweißdrahtelektrode und dem Werkstück erstreckt, und einen für die mindestens eine Schweißprozessphase einstellbaren Lichtbogenlängenparameter aufweist, wobei für den Übergang zwischen aufeinanderfolgenden verschiedenartigen Schweißprozessphasen bei einer Änderung des eingestellten Lichtbogenlängenparameters des Schweißlichtbogens parallel dazu mindestens ein Übergangsschweißparameter in Abhängigkeit von der vorgenommenen Lichtbogenlängenparameteränderung zur Stabilisierung des Schweißprozessphasenüberganges automatisch angepasst wird.

Bei einer möglichen Ausführungsform des erfindungsgemäßen Verfahrens zur Stabilisierung eines Überganges zwischen verschiedenartigen Schweißprozessphasen eines Schweißprozesses umfassen die Übergangsschweißparameter eine Drahtvorschubgeschwindigkeit der abschmelzbaren Schweißdrahtelektrode.

Bei einer weiteren möglichen Ausführungsform des erfindungsgemäßen Verfahrens zur Stabilisierung eines Überganges zwischen verschiedenartigen Schweißprozessphasen eines Schweißprozesses umfassen die Übergangsschweißparameter eine Amplitude und/oder eine Polarität des durch die Schweißdrahtelektrode fließenden mittleren Schweißstromes.

Bei einer weiteren möglichen Ausführungsform des erfindungsgemäßen Verfahrens zur Stabilisierung eines Überganges zwischen verschiedenartigen Schweißprozessphasen eines Schweißprozesses umfassen die Übergangsschweißparameter eine Amplitude und/oder eine Polarität der zwischen der Schweißdrahtelektrode und dem Werkstück anliegenden Schweißspannung.

Bei einer weiteren möglichen Ausführungsform des erfindungsgemäßen Verfahrens zur Stabilisierung eines Überganges zwischen verschiedenartigen Schweißprozessphasen eines Schweißprozesses umfassen die Übergangsschweißparameter eine Anzahl und/oder eine Frequenz von Impulsen des durch die Schweißdrahtelektrode fließenden Schweißstromes.

Bei einer weiteren möglichen bevorzugten Ausführungsform des erfindungsgemäßen Verfahrens weist der Lichtbogenparameter eine Lichtbogenlänge des Schweißlichtbogens auf.

Bei einer möglichen Ausführungsform des erfindungsgemäßen Verfahrens zur Stabilisierung eines Überganges zwischen verschiedenartigen Schweißprozessphasen eines Schweißprozesses wird mit zunehmender bzw. abnehmender vorgenommener Lichtbogenlängenänderung die Drahtvorschubgeschwindigkeit und/oder die Beschleunigung der abschmelzbaren Schweißdrahtelektrode als Übergangsschweißparameter zur Stabilisierung des Schweißprozessphasenüberganges automatisch erhöht bzw. reduziert.

Bei einer weiteren möglichen Ausführungsform des erfindungsgemäßen Verfahrens zur Stabilisierung eines Überganges zwischen verschiedenartigen Schweißprozessphasen eines Schweißprozesses wird mit zunehmender bzw. abnehmender vorgenommener Lichtbogenlängenänderung die Amplitude und/oder Zeitdauer des Schweißstromes und/oder die Amplitude und/oder Zeitdauer der Schweißspannung automatisch erhöht bzw. reduziert.

Bei einer weiteren möglichen Ausführungsform des erfindungsgemäßen Verfahrens zur Stabilisierung eines Überganges zwischen verschiedenartigen Schweißprozessphasen eines Schweißprozesses wird mit zunehmender bzw. abnehmender vorgenommener Lichtbogenlängenänderung die Anzahl und/oder die Frequenz von Impulsen des Schweißstromes automatisch reduziert bzw. erhöht.

Bei einer weiteren möglichen Ausführungsform des erfindungsgemäßen Verfahrens zur Stabilisierung eines Überganges zwischen verschiedenartigen Schweißprozessphasen eines Schweißprozesses werden für verschiedene Kombinationen von Paaren aufeinanderfolgender verschiedenartiger Schweißprozessphasen des Schweißprozesses jeweils für verschiedene vornehmbare Lichtbogenparameteränderungen zugehörige konfigurierbare Schweißparametersätze von Übergangsschweißparametern in einem Parameterdatenspeicher tabellarisch gespeichert.

Bei einer weiteren möglichen Ausführungsform des erfindungsgemäßen Verfahrens zur Stabilisierung eines Überganges zwischen verschiedenartigen Schweißprozessphasen eines Schweißprozesses werden in Abhängigkeit von der vorgenommenen Lichtbogenparameteränderung und der Kombination der beiden aufeinanderfolgenden verschiedenartigen Schweißprozessphasen der zugehörige Schweißparametersatz aus dem Parameterdatenspeicher ausgelesen und die entsprechenden Übergangsschweißparameter zur Stabilisierung des Schweißprozessphasenüberganges zwischen den beiden Schweißprozessphasen angepasst.

Bei einer weiteren möglichen Ausführungsform des erfindungsgemäßen Verfahrens zur Stabilisierung eines Überganges zwischen verschiedenartigen Schweißprozessphasen eines Schweißprozesses werden für verschiedene Kombinationen von Paaren aufeinanderfolgender verschiedenartiger Schweißprozessphasen des Schweißprozesses Übergangsfunktionskennlinien für verschiedene Übergangsschweißparameter vorgesehen.

Bei einer weiteren möglichen Ausführungsform des erfindungsgemäßen Verfahrens zur Stabilisierung eines Überganges zwischen verschiedenartigen Schweißprozessphasen eines Schweißprozesses werden in Abhängigkeit von der vorgenommenen Lichtbogenparameteränderung und der zugehörigen gespeicherten Übergangsfunktionskennlinien Parameterwerte für die verschiedenen Übergangsschweißparameter während des Schweißprozessphasenüberganges berechnet und die Übergangsschweißparameter zur Stabilisierung des Schweißprozessphasenüberganges entsprechend den berechneten Parameterwerten automatisch angepasst.

Bei einer weiteren möglichen Ausführungsform des erfindungsgemäßen Verfahrens weisen die unterschiedlichen Schweißprozessphasen des Schweißprozesses auf:
eine Kurzlichtbogenschweißphase,
eine Langlichtbogenschweißphase,
eine Impulslichtbogenschweißphase,
eine Kurzlichtbogenschweißphase mit Vor- oder Rückbewegung, eine Sprühlichtbogenschweißphase und/oder
eine Schweißphase mit rotierendem Lichtbogen, und/oder eine Übergangslichtbogenphase.

Die Erfindung schafft gemäß einem weiteren Aspekt ein Schweißgerät mit den in Patentanspruch 12 angegebenen Merkmalen.

Die Erfindung schafft demnach ein Schweißgerät zum Schweißen eines Werkstückes in einem Schweißprozess, der verschiedenartige Schweißprozessphasen umfasst, in denen das Werkstück jeweils mit einem Schweißlichtbogen geschweißt wird, der sich zwischen einer Schweißdrahtelektrode des Schweißgerätes und dem Werkstück erstreckt, wobei für die Schweißprozessphasen ein Lichtbogenparameter des Schweißlichtbogens, insbesondere dessen Lichtbogenlänge, einstellbar ist, wobei das Schweißgerät eine Steuerung aufweist, die während eines Überganges zwischen verschiedenartigen Schweißprozessphasen des Schweißprozesses eine Änderung des Lichtbogenparameters des Schweißlichtbogens entsprechend der für die Schweißprozessphasen eingestellten Lichtbogenparameter vornimmt und gleichzeitig mindestens einen Übergangsschweißparameter einer Schweißstromquelle des Schweißgerätes in Abhängigkeit der vorgenommenen Lichtbogenparameteränderung zur Stabilisierung des Schweißprozessphasenüberganges innerhalb des Schweißprozesses automatisch anpasst.

Bei einer möglichen Ausführungsform des erfindungsgemäßen Schweißgerätes sind für verschiedene Schweißprozessphasen des Schweißprozesses jeweils zugehörige Lichtbogenparameter-Sollwerte für den zu verwendenden Lichtbogenparameter voreingestellt, welche durch einen Nutzer mittels eines Einstellelementes innerhalb vorgegebener Grenzen jeweils manuell justierbar bzw. nachjustierbar sind.

Die Lichtbogenparameter-Sollwerte, insbesondere für die Lichtbogenlänge, können auch über ein Interface von einer externen, übergeordneten Steuerung oder einer Robotersteuerung vorgegeben werden.

Bei einer weiteren möglichen Ausführungsform des erfindungsgemäßen Schweißgerätes sind für verschiedene Kombinationen von Paaren aufeinanderfolgender verschiedenartiger Schweißprozessphasen des Schweißprozesses jeweils für verschiedene vornehmbare Lichtbogenparameteränderungen zugehörige konfigurierbare Schweißparametersätze von Übergangsschweißparametern in einem Parameterdatenspeicher des Schweißgerätes tabellarisch gespeichert.

Bei einer weiteren möglichen Ausführungsform des erfindungsgemäßen Schweißgerätes werden in Abhängigkeit von der vorgenommenen Lichtbogenparameteränderung und der Kombination der beiden aufeinanderfolgenden verschiedenartigen Schweißprozessphasen der zugehörige Schweißparametersatz aus dem Parameterdatenspeicher des Schweißgerätes ausgelesen und die entsprechenden Übergangsschweißparameter durch die Steuerung des Schweißgerätes zur Stabilisierung des Schweißprozessphasenüberganges zwischen den beiden Schweißprozessphasen automatisch angepasst.

Bei einer weiteren möglichen Ausführungsform des erfindungsgemäßen Schweißgerätes sind für die verschiedenen Kombinationen von Paaren aufeinanderfolgender verschiedenartiger Schweißprozessphasen des Schweißprozesses Übergangsfunktionskennlinien für verschiedene Übergangsschweißparameter vorgesehen.

Bei einer möglichen Ausführungsform des erfindungsgemäßen Schweißgerätes werden in Abhängigkeit von der vorgenommenen Lichtbogenparameteränderung und den zugehörigen gespeicherten Übergangsfunktionskennlinien Parameterwerte für die verschiedenen Übergangsschweißparameter während des Schweißprozessphasenüberganges durch eine Berechnungseinheit der Steuerung des Schweißgerätes berechnet und die Übergangsschweißparameter zur Stabilisierung des Schweißprozessphasenüberganges durch die Steuerung des Schweißgerätes automatisch angepasst.

Bei einer weiteren möglichen Ausführungsform des erfindungsgemäßen Schweißgerätes weist das Schweißgerät eine Schnittstelle zum Laden von Schweißparametersätzen der Übergangsschweißparameter und/oder zum Laden von Übergangsfunktionskennlinien aus einer Datenbank auf.

Im Weiteren werden mögliche Ausführungsformen des erfindungsgemäßen Verfahrens und der erfindungsgemäßen Vorrichtung zur Stabilisierung eines Überganges zwischen verschiedenartigen Schweißprozessphasen eines Schweißprozesses unter Bezugnahme auf die beigefügten Figuren näher erläutert.
- Fig. 1: zeigt ein schematisches Blockschaltbild zur Erläuterung der Funktionsweise eines erfindungsgemäßen Schweißgerätes;
- Fig. 2: zeigt eine Skizze zur Erläuterung der Funktionsweise des erfindungsgemäßen Verfahrens und der erfindungsgemäßen Vorrichtung zur Stabilisierung eines Überganges zwischen verschiedenartigen Schweißprozessphasen eines Schweißprozesses;
- Fig. 3A, 3B, 3C: zeigen beispielhaft Schweißprozesse mit zyklisch abwechselnden Schweißprozessphasen zur Erläuterung der Funktionsweise des erfindungsgemäßen Verfahrens und der erfindungsgemäßen Vorrichtung zur Stabilisierung eines Überganges zwischen verschiedenartigen Schweißprozessphasen eines Schweißprozesses;

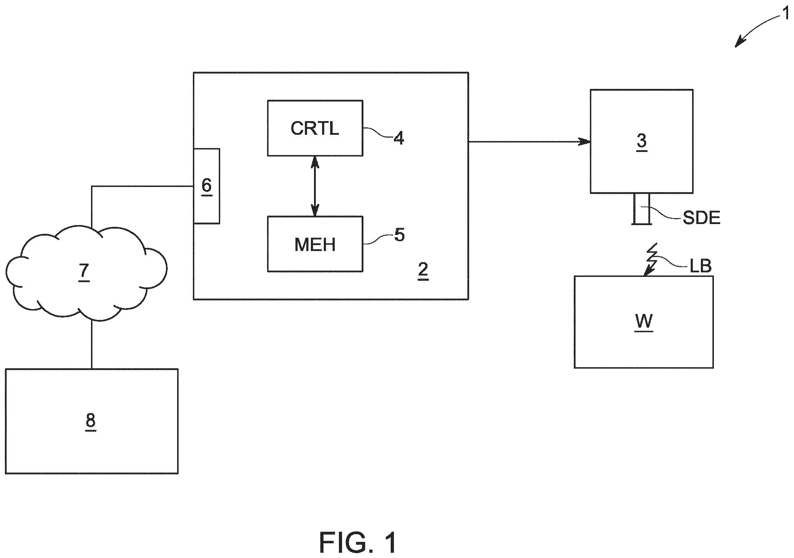

Wie man aus Fig. 1 erkennen kann, weist ein Schweißgerät 1 gemäß einem Aspekt der Erfindung eine Schweißstromquelle 2 auf, die einen Schweißstrom und eine Schweißspannung an einen Schweißbrenner 3 des Schweißgerätes 1 liefert. Der Schweißbrenner 3 kann über eine Schutzgasdüse verfügen. Aus einem Kontaktrohr des Schweißbrenners 3 kann eine Schweißdrahtelektrode SDE herausgeführt werden, um ein Werkstück W zu schweißen. Zwischen der Schweißdrahtelektrode SDE und dem Werkstück W entsteht ein Schweißlichtbogen LB, wie in Fig. 1 dargestellt. Das Schweißgerät 1 dient zum Schweißen des Werkstückes W in einem Schweißprozess SP, der verschiedenartige Schweißprozessphasen SPP umfassen kann, in denen das Werkstück W jeweils mit dem Schweißlichtbogen LB geschweißt wird. Für die verschiedenen Schweißprozessphasen SPP können Lichtbogenparameter LBP des Schweißlichtbogens LB, insbesondere dessen Lichtbogenlänge LBL, eingestellt werden. Das Schweißgerät 1 weist eine Steuerung 4 auf, die bei einem Übergang zwischen verschiedenartigen Schweißprozessphasen SPP des Schweißprozesses SP eine Änderung eines Lichtbogenlängenparameters LBLP des Schweißlichtbogens SLB entsprechend der für die Schweißprozessphasen SPP eingestellten Lichtbogenparameter LBP vornimmt. Dabei passt die Steuerung 4 gleichzeitig mindestens einen Übergangsschweißparameter ÜSP der Schweißstromquelle 2 des Schweißgerätes 1 in Abhängigkeit von der vorgenommenen Lichtbogenlängenparameteränderung ΔLBLP zur Stabilisierung des Schweißprozessüberganges SPÜ innerhalb des Schweißprozesses SP automatisch an. Die Schweißstromquelle 4 kann über eine Schnittstelle 6 verfügen. Über die Schnittstelle 6 und ein Netzwerk 7 kann die lokale Steuerung 4 der Schweißstromquelle 2 Steuerbefehle und/oder Soll-Parametereinstellungen von einer externen, übergeordneten Steuerung 8, beispielsweise einer Automatisierungsanlage erhalten.

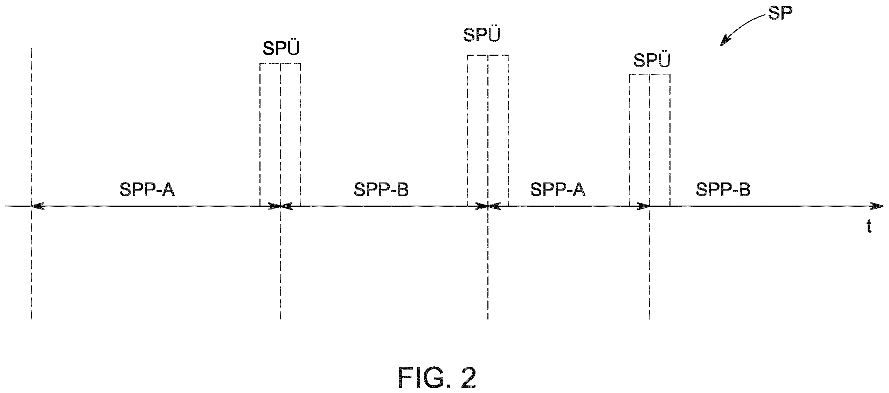

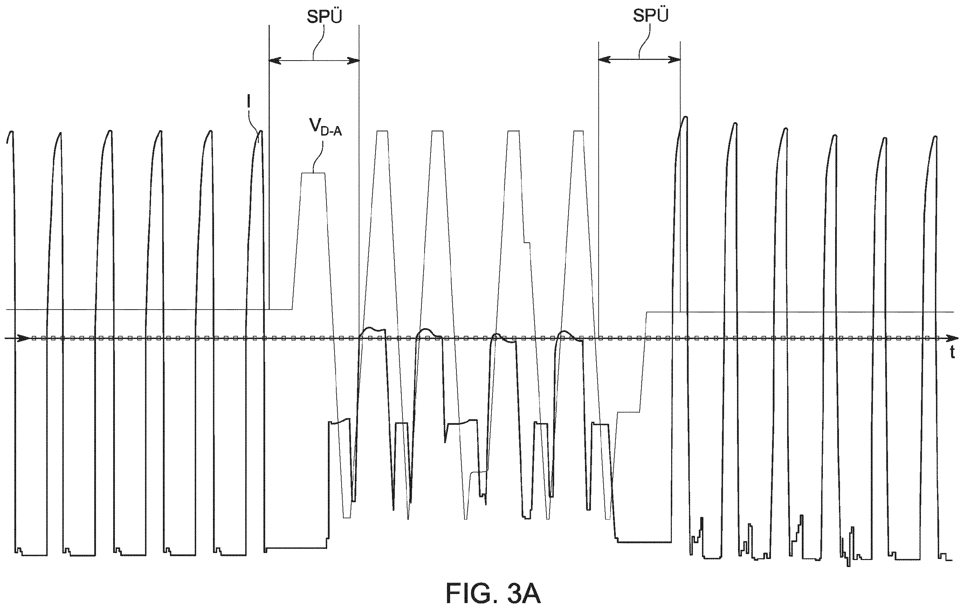

Fig. 2 zeigt schematisch einen Schweißprozess SP, der aus einer Folge unterschiedlicher bzw. verschiedener Schweißprozessphasen SPPbesteht. Die verschiedenen Schweißprozessphasen SPP können beispielsweise eine Kurzlichtbogenschweißphase, eine Kurzlichtbogenschweißphase mit reversierender Drahtbewegung (CMT), eine Langlichtbogenschweißphase, eine Impulslichtbogenschweißphase, eine Sprühlichtbogenschweißphase und/oder eine Schweißphase mit rotierendem Lichtbogen umfassen. Die Sequenz der verschiedenartigen Schweißprozessphasen SPP kann je nach Schweißprozess SP unterschiedlich sein. Beispielsweise können sich zwei verschiedenartige Schweißprozessphasen SPP, beispielsweise die Schweißprozessphase SPP-A und die Schweißprozessphase SPP-B, zyklisch abwechseln, wie beispielhaft in Fig. 3A dargestellt. Beispielsweise kann sich eine Impulslichtbogenschweißphase mit einer Kurzlichtbogenschweißphase zyklisch abwechseln. Selbstverständlich können sich auch drei oder mehr Schweißprozessphasen SPP abwechseln (nicht dargestellt).

Fig. 2 zeigt auch schematisch die verschiedenen Schweißprozessübergänge SPÜ zwischen den Schweißprozessphasen SPP eines Schweißprozesses. In den Schweißprozessübergängen SPÜ werden die Übergangsschweißparameter ÜSP angepasst bzw. geregelt. Die Dauer der Schweißprozessüberganges SPÜ und die Gruppe der dabei eingepassten Übergangsschweißparameter ÜSP hängen von den beiden betreffenden Schweißprozessphasen SPP, zwischen denen der Schweißprozesübergang SPÜ erfolgt, ab.

Für die verschiedenen Schweißprozessphasen SPP des Schweißprozesses SP können jeweils zugehörige Lichtbogenparameter-Sollwerte, insbesondere Lichtbogenlängen-Sollwerte, für den zu verwendenden Lichtbogenparameter LBP voreingestellt werden. Diese Voreinstellungen sind durch einen Nutzer mittels eines Einstellelementes an der Schweißstromquelle 2 innerhalb vorgegebener Grenzen jeweils manuell justierbar bzw. nachjustierbar bzw. korrigierbar. Alternativ können die Voreinstellungen über ein Interface von der externen Steuerung 8 vorgenommen werden.

Für verschiedene Kombinationen von Paaren aufeinanderfolgender verschiedenartiger Schweißprozessphasen SPP des Schweißprozesses SP können jeweils für verschiedene vornehmbare Lichtbogenlängenparameteränderungen SLBLP zugehörige konfigurierbare Schweißparametersätze von Übergangsschweißparametern ÜSP in einem Parameterdatenspeicher 5 des Schweißgerätes 1 tabellarisch gespeichert sein. Bei einer möglichen Ausführungsform werden die Übergangsschweißparameter ÜSP über eine Schnittstelle aus einer Datenbank in den lokalen Datenspeicher 5 der Schweißstromquelle 2 geladen. In Abhängigkeit von der vorgenommenen Lichtbogenlängenparameteränderung ΔLBLP und der Kombination der beiden aufeinanderfolgenden verschiedenartigen Schweißprozessphasen SPP wird der zugehörige Schweißparametersatz aus dem Parameterdatenspeicher 5 des Schweißgerätes 1 ausgelesen und die entsprechenden Übergangsschweißparameter ÜSP werden durch eine Steuerung 4 des Schweißgerätes 1 zur Stabilisierung des betreffenden Schweißprozessphasenüberganges SPÜ zwischen den beiden Schweißprozessphasen SPP automatisch angepasst bzw. geregelt.

Bei einer weiteren möglichen Ausführungsform des erfindungsgemäßen Schweißgerätes 1 können für die verschiedenen Kombinationen von Paaren aufeinanderfolgender verschiedenartiger Schweißprozessphasen SPP des Schweißprozesses SP Übergangsfunktionskennlinien für verschiedene Übergangsschweißparameter ÜSP vorgesehen werden. In Abhängigkeit von der vorgenommenen Lichtbogenlängenparameteränderung ΔLBLP und den zugehörigen gespeicherten Übergangsfunktionskennlinien werden Parameterwerte für die verschiedenen Übergangsschweißparameter ÜSP bei dem Schweißprozessphasenübergang SPÜ durch eine Berechnungseinheit der Steuerung 4 des Schweißgerätes 1 berechnet und die Übergangsschweißparameter ÜSP zur Stabilisierung des Schweißprozessphasenüberganges SPÜ durch die Steuerung 4 des Schweißgerätes 1 automatisch angepasst. Das Schweißgerät 1 verfügt vorzugsweise über eine Schnittstelle zum Laden von Schweißparametersätzen der Übergangsschweißparameter ÜSP und/oder zum Laden von Übergangsfunktionskennlinien aus einer Datenbank. Diese Datenbank kann beispielsweise über ein Datennetzwerk mit einer Schnittstelle des Schweißgerätes 1 verbunden sein.

Verschiedene Übergangsschweißparameter ÜSP können mit dem erfindungsgemäßen Verfahren und der erfindungsgemäßen Vorrichtung in Abhängigkeit von einer vorgenommenen Lichtbogenparameteränderung, insbesondere einer Lichtbogenlängenänderung, zur Stabilisierung des Schweißprozessphasenüberganges SPÜ zwischen zwei aufeinanderfolgenden Schweißprozessphasen SPP des gleichen Schweißprozesses SP automatisch angepasst werden. Diese Übergangsschweißparameter ÜSP umfassen bei einer möglichen Ausführungsform eine Drahtvorschubgeschwindigkeit V_{D} der Schweißdrahtelektrode SDE und/oder eine Drahtvorschubbeschleunigung a_{D} der Schweißdrahtelektroden SDE. Weiterhin können die Übergangsschweißparameter ÜSP eine Amplitude und/oder eine Polarität des durch die Schweißdrahtelektrode SDE fließenden mittleren Schweißstromes I umfassen. Bei einer weiteren möglichen Ausführungsform umfassen die Übergangsschweißparameter ÜSP eine Amplitude und/oder eine Polarität der zwischen der Schweißdrahtelektrode SDE und dem Werkstück W anliegenden Schweißspannung U. Bei einer weiteren möglichen Ausführungsform des erfindungsgemäßen Verfahrens und der erfindungsgemäßen Vorrichtung weisen die Übergangsschweißparameter ÜSP eine Anzahl und/oder eine Frequenz von Impulsen des durch die Schweißdrahtelektrode SDE fließenden Schweißstromes I auf.

Mit positiv (+5) vorgenommener Lichtbogenlängenänderung ΔLBL oder Lichtbogenlängenparameteränderung ΔLBLP kann die Drahtvorschubgeschwindigkeit V_{D} der abschmelzbaren Schweißdrahtelektrode SDE als Übergangsschweißparameter ÜSP zur Stabilisierung des Schweißprozessphasenüberganges SPÜ zwischen zwei Schweißprozessphasen SPP des Schweißprozesses SP durch die Steuerung 4 automatisch erhöht werden. Umgekehrt kann bei negativ vorgenommener Lichtbogenlängenänderung ΔLBL die Drahtvorschubgeschwindigkeit V_{D} der abschmelzbaren Schweißdrahtelektrode SDE als Übergangsschweißparameter ÜSP zur Stabilisierung des Schweißprozessphasenüberganges SPÜ automatisch reduziert werden. Die Lichtbogenlängenänderung ΔLBL kann beispielsweise mit einem Korrekturwert erfolgen. Dabei bedeutet ein Korrekturwert von 0, dass keine Änderung der Lichtbogenlänge LBL erfolgt. Bei einer Änderung in positiver Richtung wird entsprechend die Lichtbogenlänge LBL erhöht und in negativer Richtung entsprechend reduziert. Im Folgenden wird dies beispielhaft an den Korrekturwerten -5, 0 und +5 beschrieben.

Bei einer weiteren möglichen Ausführungsform des erfindungsgemäßen Verfahrens und der erfindungsgemäßen Vorrichtung wird bei zunehmender vorgenommener (positiv) Lichtbogenlängenänderung ΔLBL die Amplitude und/oder die Zeitdauer des Schweißstromes I und/oder die Amplitude und/oder die Zeitdauer der Schweißspannung U automatisch reduziert. Umgekehrt kann bei abnehmender vorgenommener (negativ) Lichtbogenlängenänderung ΔLBL die Amplitude und/oder die Zeitdauer des Schweißstromes I und/oder die Amplitude und/oder die Zeitdauer der Schweißspannung U automatisch erhöht werden.

Weiterhin kann bei einer möglichen Ausführungsform mit zunehmender vorgenommener Lichtbogenlängenänderung ΔLBL die Anzahl und/oder die Frequenz von Impulsen des Schweißstromes I automatisch reduziert werden. Umgekehrt wird bei abnehmender vorgenommener Lichtbogenlängenänderung ΔLBL die Anzahl und/oder die Frequenz von Impulsen des Schweißstromes I automatisch erhöht.

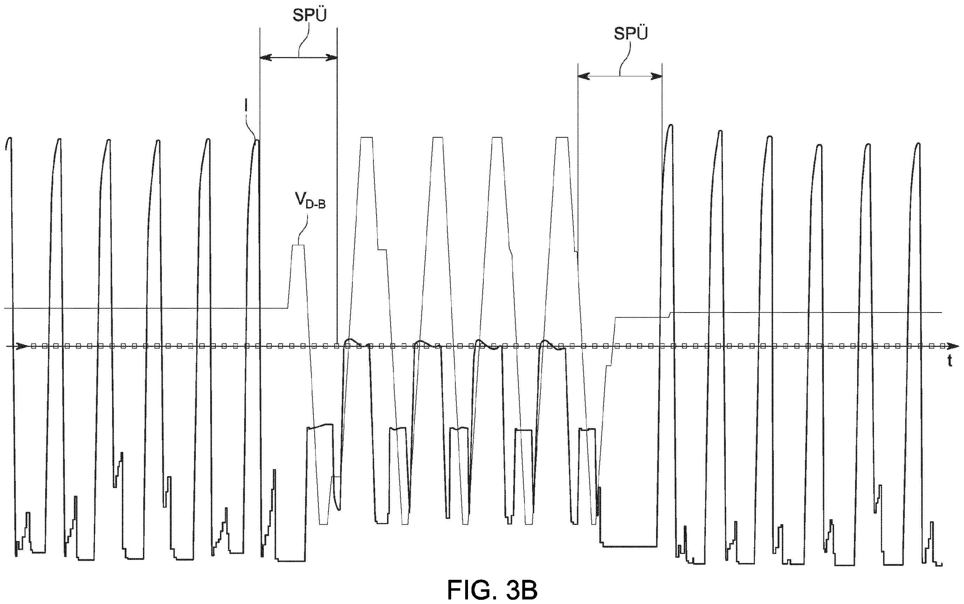

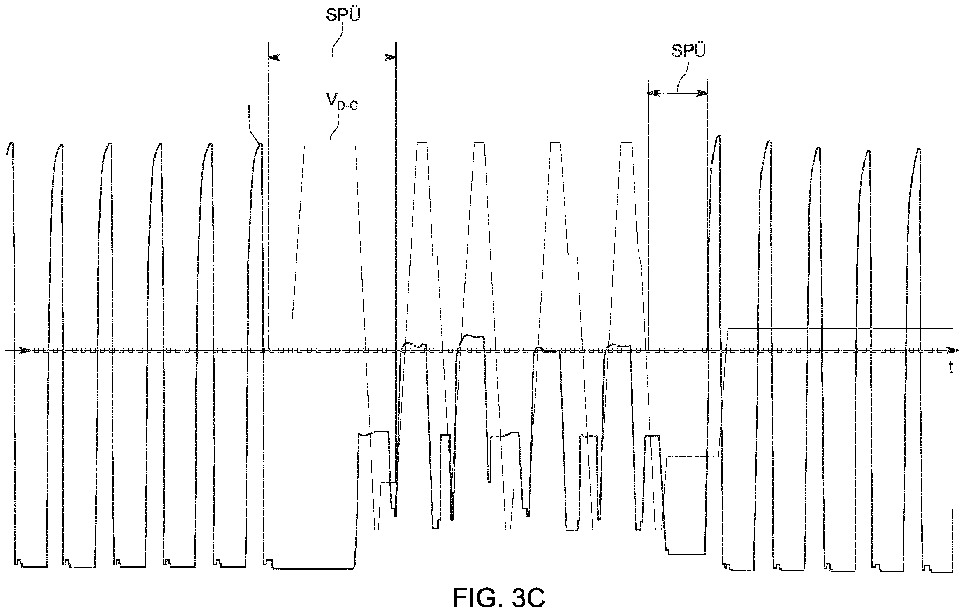

Fig. 2, 3 zeigten ein exemplarisches Beispiel eines Schweißprozesses SP mit zwei sich zyklisch abwechselnden Schweißprozessphasen SPP-A, SPP-B mit verschieden Schweißparametern, insbesondere einer Schweißspannung U, einem Schweißstrom I sowie einer Drahtvorschubgeschwindigkeit V_{D}. Die Übergangsschweißparameter ÜSP können an die Lichtbogenlängen LBL der Schweißprozessphasen A, B angepasst werden. Bei einer manuellen oder ferngesteuerten Änderung bzw. Nachjustierung bzw. Korrektur der Lichtbogenlängeneinstellung kann es zu Instabilitäten kommen, welche durch das erfindungsgemäße Verfahren vermieden bzw. beseitigt werden. Dieses bewirkt nämlich, dass die Dauer der Schweißprozessübergänge SPÜ durch die Änderung der Lichtbogenlänge LBL im Wesentlichen nicht verändert, insbesondere nicht verlängert, wird.

Parallel zu einer durch manuelle Nachjustierung herbeigeführten Lichtbogenlängenkorrektur erfolgt mithilfe des erfindungsgemäßen Verfahrens automatisch eine Korrektur der Übergangsschweißparameter ÜSP, insbesondere der Drahtvorschubgeschwindigkeit V_{D} des Schweißstromes I, sowie deren zeitliche Abläufe.
Darunter ist zu verstehen, dass in dem Schweißprozessübergang SPÜ die Drahtvorschubgeschwindigkeit vd kurzzeitig erhöht wird um einen Kurzschluss KS schneller einzuleiten und anschließend die Schweißdrahtelektrode SDE rückwärts bewegt wird. Alternativ kann die Drahtvorschubgeschwindigkeit vd stufenförmig geändert werden. Die Werte der Parameter sind dabei im Wesentlichen unabhängig von den Werten in den Schweißprozessphasen SPP, sodass diese frei wählbar sind. Ebenso können die zeitlichen Abläufe während der unterschiedlichen Schweißprozessübergänge SPÜ unterschiedlich sein (nicht dargestellt). Generell erfolgt die Regelung bzw. Anpassung in den Schweißprozessübergängen SPÜ in Abhängigkeit der Schweißprozessphasen SPPs, da jede Schweißprozessphase SPP einen unterschiedlichen Wärmeeintrag in das Werkstück W hat.

Allgemein wird der Schweißprozessübergang SPÜ beispielsweise auf ein Pulsende oder auf einen Kurzschluss KS getriggert. Diese Ereignisse können also als Start/Ende des Schweißprozessüberganges SPÜ dienen. Die Dauer des Schweißprozessübergangs SPÜ kann auch durch eine vorgegebene Zeitdauer/Zyklenzahl definiert sein. Die Anpassung der Übergangsschweißparameter kann aber auch vor Beginn des Schweißprozessüberganges SPÜ beginnen. Falls beispielsweise in einem Schweißprozess SP eine sehr hohe Drahtvorschubgeschwindigkeit vd erforderlich ist und in dem darauf folgenden Schweißprozess SP eine sehr niedrige Drahtvorschubgeschwindigkeit vd erforderlich ist, wird in den letzten Zyklen des aktuellen SP bereits die Drahtvorschubgeschwindigkeit vd gesenkt. Dadurch sind die Änderungen in dem Schweißprozessübergang SPÜ nicht so sprungartig und der Schweißprozessübergang erfolgt stabiler.

Beispielsweise kann in einem Schweißprozess SP ein Übergang bzw. ein Wechsel zwischen einer ersten Schweißprozessphase SPP-A (Impulslichtbogenschweißen) und einer zweiten Schweißprozessphase SPP-B, beispielsweise Kurzlichtbogenschweißen (entweder mit kontinuierliche Drahtvorschubgeschwindigkeit vd in Vorwärtsrichtung oder mit zyklischer Vor-/Rückbewegung der Drahtvorschubgeschwindigkeit vd), erfolgen. In der ersten Schweißprozessphase SPP-A (Impulslichtbogenschweißen) ist der Wärmeeintrag deutlich höher. Dadurch ist automatisch die Lichtbogenlänge LBL höher als in der zweiten Schweißprozessphase SPP-B (Kurzlichtbogen). Um von der ersten Schweißprozessphase A (Impulslichtbogenschweißen) in die zweite Schweißprozessphase B (Kurzlichtbogenphase) zu wechseln, wird mithilfe des erfindungsgemäßen Verfahrens automatisch diese Differenz in der Lichtbogenlänge ΔLBL überwunden. Wenn die Lichtbogenlänge LBL der Schweißprozessphase ohne das erfindungsgemäße Verfahren SPP-A erhöht wird, dauert ein Wechsel von der Schweißprozessphase SPP-A in die Schweißprozesslänge SPP-B länger, sodass möglicherweise nicht mehr das gewünschte Schweißergebnis erzielbar wäre. Mit dem erfindungsgemäßen Verfahren wird dem entgegengewirkt, sodass das gewünschte Schweißergebnis erzielt wird. Bei einer möglichen Ausführungsform wird beispielsweise die Drahtvorschubgeschwindigkeit V_{D} der Schweißdrahtelektrode SDE parallel zu einer Lichtbogenlängenänderung ΔLBL in dem Schweißprozessübergang SPÜ beim Wechsel von SPP-A auf SPP-B erhöht. Hierdurch lässt sich die Wegstrecke, d.h. die Lichtbogenlängendistanz, schneller überwinden. Mit dem erfindungsgemäßen Verfahren lässt sich die Qualität des Schweißergebnisses bei einem Schweißprozess SP, welcher verschiedenartige Schweißprozessphasen SPP umfasst, deutlich steigern.

In den Figuren 3A bis 3C sind Schweißprozessübergänge SPÜ im Details und beispielhaft dargestellt. Bei Fig. 3B ist die Lichtbogenlänge LBL reduziert (-5), bei Fig. 3C erhöht (+5). Dies erfolgt entsprechend im Vergleich zu Fig. 3A (+/- 0). Wesentlich ist hierbei, dass durch die Wahl bzw. die Regelung der Übergangsschweißparameter ÜSP die Dauer des Schweißprozessüberganges SPÜ im Wesentlichen konstant gehalten wird. Die Regelung der Übergangsschweißparameter ÜSP erfolgt also derart, dass im Wesentlichen der Sollwert für die Dauer des Schweißprozessübergangs SPÜ annähernd beibehalten wird. Dies wird hierbei im Wesentlichen durch die Regelung des Drahtvorschubs VD erreicht.

### BEZUGSZEICHEN

- 1: Schweißgerät
- 2: Schweißstromquelle
- 3: Schweißbrenner
- 4: Parameterspeicher
- 5: Steuerung
- 6: Schnittstelle
- 7: Netzwerk
- 8: Steuerung
- SP: Schweißprozess
- SPP: Schweißprozessphase
- SPÜ: Schweißprozessübergang
- SDE: Schweißdrahtelektrode
- W: Wertstücke
- LB: Schweißlichtbogen

## Patentansprüche

1. Verfahren zum Stabilisieren eines Schweißprozessphasenüberganges zwischen verschiedenartigen Schweißprozessphasen (SPP) eines Schweißprozesses (SP),
wobei zumindest in den Schweißprozessphasen (SPP) ein Werkstück (W), jeweils mit einem Schweißlichtbogen, (SLB) geschweißt wird, der sich zwischen einer Schweißdrahtelektrode (SDE) und dem Werkstück (W) erstreckt, und einen für die mindestens eine Schweißprozessphase, SPP, einstellbaren Lichtbogenlängenparameter, LBLP, aufweist, wobei für den Übergang zwischen aufeinanderfolgenden verschiedenartigen Schweißprozessphasen, SPP, bei einer Änderung des eingestellten Lichtbogenlägenparameters, LBLP, des Schweißlichtbogens (SLB) parallel dazu mindestens ein Übergangsschweißparameter, ÜSP, in Abhängigkeit von der vorgenommenen Lichtbogenlängenparameteränderung, ΔLBLP, zur Stabilisierung des Schweißprozessphasenüberganges (SPÜ) automatisch angepasst wird.

2. Verfahren nach Anspruch 1,
wobei die Übergangsschweißparameter,ÜSP,
- eine Drahtvorschubgeschwindigkeit, V_{D}, und/oder Drahtvorschubbeschleunigung, a_{D}, der abschmelzbaren Schweißdrahtelektrode (SDE) und/oder
- eine Amplitude und/oder Polarität des durch die Schweißdrahtelektrode, SDE, fließenden mittleren Schweißstromes, Iₛ,
- eine Amplitude und/oder Polarität der zwischen der Schweißdrahtelektrode (SDE) und dem Werkstück (W) anliegenden Schweißspannung, Uₛ, und/oder
- eine Anzahl und/oder Frequenz von Impulsen des durch die Schweißdrahtelektrode, SDE, fließenden Schweißstromes, Iₛ, aufweisen.

3. Verfahren nach Anspruch 1 oder 2,
wobei mit zunehmender bzw. abnehmender vorgenommener Lichtbogenlängenänderung, ΔLBL, die Drahtvorschubgeschwindigkeit, V_{D}, der abschmelzbaren Schweißdrahtelektrode (SDE) als Übergangsschweißparameter, ÜSP, zur Stabilisierung des Schweißprozessphasenüberganges (SPÜ) automatisch erhöht bzw. reduziert wird.

4. Verfahren nach Anspruch 3,
wobei mit zunehmender bzw. abnehmender vorgenommener Lichtbogenlängenänderungen, ΔLBL, die Amplitude und/oder die Zeitdauer des Schweißstromes, Iₛ, und/oder die Amplitude der Schweißspannung, Uₛ, automatisch reduziert bzw. erhöht wird.

5. Verfahren nach einem der vorangehenden Ansprüche 3 oder 4, wobei mit zunehmender bzw. abnehmender vorgenommener Lichtbogenlängenänderung, ΔLBL, die Anzahl und/oder die Frequenz von Impulsen des Schweißstromes, Iₛ, automatisch reduziert bzw. erhöht wird.

6. Verfahren nach einem der vorangehenden Ansprüche 1 bis 5, wobei für verschiedene Kombinationen von Paaren aufeinanderfolgender verschiedenartiger Schweißprozessphasen (SPP) des Schweißprozesses (SP) jeweils für verschiedene vornehmbare Lichtbogenparameteränderungen, ΔLBP, zugehörige konfigurierbare Schweißparametersätze von Übergangsschweißparametern, ÜSP, in einem Parameterdatenspeicher (5) tabellarisch gespeichert werden.

7. Verfahren nach Anspruch 6,
wobei in Abhängigkeit von der vorgenommenen Lichtbogenparameteränderung, ΔLBP, und der Kombination der beiden aufeinanderfolgenden verschiedenartigen Schweißprozessphasen (SPP) der zugehörige Schweißparametersatz aus dem Parameterdatenspeicher (5) ausgelesen und die entsprechenden Übergangsschweißparameter, ÜSP, zur Stabilisierung des Schweißprozessphasenüberganges, SPÜ, zwischen den beiden Schweißprozessphasen (SPP) angepasst werden.

8. Verfahren nach einem der vorangehenden Ansprüche 1 bis 7, wobei für verschiedene Kombinationen von Paaren aufeinanderfolgender verschiedenartiger Schweißprozessphasen (SPP) des Schweißprozesses (SP) Übergangsfunktionskennlinien für verschiedene Übergangsschweißparameter, ÜSP, vorgesehen werden.

9. Verfahren nach Anspruch 8,
wobei in Abhängigkeit von der vorgenommenen Lichtbogenparameteränderung, ΔLBP, und der zugehörigen gespeicherten Übergangsfunktionskennlinien Parameterwerte für die verschiedenen Übergangsschweißparameter, ÜSP, während des Schweißprozessphasenüberganges (SPÜ) berechnet und die Übergangsschweißparameter, ÜSP, zur Stabilisierung des Schweißprozessphasenüberganges (SPÜ) entsprechend den berechneten Parameterwerten angepasst werden.

10. Verfahren nach einem der vorangehenden Ansprüche 1 bis 9, wobei die Schweißprozessphasen (SPP) aufweisen:
eine Kurzlichtbogenschweißphase,
eine Langlichtbogenschweißphase,
eine Impulslichtbogenschweißphase,
eine Kurzlichtbogenschweißphase mit Vor- oder Rückbewegung,
eine Sprühlichtbogenschweißphase,
eine Schweißphase mit rotierendem Schweißlichtbogen und/oder
eine Übergangslichtbogenschweißphase.

11. Schweißgerät (1) zum Schweißen eines Werkstückes (W) in einem Schweißprozess (SP) der verschiedenartige Schweißprozessphasen (SPP) umfasst, in denen das Werkstück (W) jeweils mit einem Schweißlichtbogen (LB) geschweißt wird, der sich zwischen einer Schweißdrahtelektrode (SDE) des Schweißgerätes (1) und dem Werkstück (W) erstreckt, wobei für die Schweißprozessphasen (SPP) ein Lichtbogenparameter, LBP, des Schweißlichtbogens (LB) insbesondere dessen Lichtbogenlänge, LBL, einstellbar ist,
wobei das Schweißgerät (1) eine Steuerung (4) aufweist, die während eines Schweißprozessüberganges (SPÜ) zwischen verschiedenartigen Schweißprozessphasen (SPP) des Schweißprozesses (SP) eine Änderung des Lichtbogenparameters, ΔLBP, des Schweißlichtbogens (LB) entsprechend der für die Schweißprozessphasen (SPP) eingestellten Lichtbogenparameter, LBP, vornimmt und gleichzeitig mindestens einen Übergangsschweißparameter, ÜSP, einer Schweißstromquelle (2) des Schweißgerätes (1) in Abhängigkeit der vorgenommenen Lichtbogenparameteränderung, ΔLBP, zur Stabilisierung des Schweißprozessüberganges (SPÜ) innerhalb des Schweißprozesses (SP) automatisch anpasst.

12. Schweißgerät nach Anspruch 11,
wobei für die verschiedenen Schweißprozessphasen (SPP) des Schweißprozesses (SP) jeweils zugehörige Lichtbogenparameter-Sollwerte für den zu verwendenden Lichtbogenparameter, LBP, voreingestellt sind, welche durch einen Nutzer mittels eines Einstellelementes oder durch eine externe Steuerung (8) innerhalb vorgegebener Grenzen jeweils manuell justierbar sind.

13. Schweißgerät nach Anspruch 11 oder 12,
wobei für verschiedene Kombinationen von Paaren aufeinanderfolgender verschiedenartiger Schweißprozessphasen (SPP) des Schweißprozesses (SP) jeweils für verschiedene vornehmbare Lichtbogenparameteränderungen, ΔLBP, zugehörige konfigurierbare Schweißparametersätze von Übergangsschweißparametern, ÜSP, in einem Parameterdatenspeicher (5) des Schweißgerätes (1) tabellarisch gespeichert sind, wobei in Abhängigkeit von der vorgenommenen Lichtbogenparameteränderung, ΔLBP, und der Kombination der beiden aufeinanderfolgenden verschiedenartigen Schweißprozessphasen (SPP) der zugehörige Schweißparametersatz aus dem Parameterdatenspeicher (5) des Schweißgerätes (1) ausgelesen und die entsprechenden Übergangsschweißparameter, ÜSP, durch die Steuerung (4) des Schweißgerätes (1) zur Stabilisierung des Schweißprozessphasenüberganges (SPÜ) zwischen den beiden Schweißprozessphasen (SPP) angepasst werden.

14. Schweißgerät nach einem der vorangehenden Ansprüche 11 bis 13,
wobei für die verschiedenen Kombinationen von Paaren aufeinanderfolgender verschiedenartiger Schweißprozessphasen (SPP) des Schweißprozesses (SP) Übergangsfunktionskennlinien für verschiedene Übergangsschweißparameter vorgesehen sind,
wobei in Abhängigkeit von der vorgenommenen Lichtbogenparameteränderung, ΔLBP, und den zugehörigen gespeicherten Übergangsfunktionskennlinien Parameterwerte für die verschiedenen Übergangsschweißparameter, ÜSP, während des Schweißprozessphasenüberganges (SPÜ) durch eine Berechnungseinheit der Steuerung (4) des Schweißgerätes (1) berechnet und die Übergangsschweißparameter, ÜSP, zur Stabilisierung des Schweißprozessphasenüberganges (SPÜ) durch die Steuerung (4) des Schweißgerätes (1) angepasst werden.

15. Schweißgerät nach einem der vorangehenden Ansprüche 11 bis 14 mit einer Schnittstelle zum Laden von Schweißparametersätzen der Übergangsschweißparameter, ÜSP, und/oder zum Laden von Übergangsfunktionskennlinien aus einer Datenbank.
